Europäisches Patentamt

European Patent Office

Office européen des brevets

(11) Veröffentlichungsnummer: **0 300 124**
**A1**

## (12) EUROPÄISCHE PATENTANMELDUNG

(21) Anmeldenummer: 88103000.1

(22) Anmeldetag: 11.11.81

(51) Int. Cl.4: **H02K 29/06** , **H02K 41/02**

(30) Priorität: 11.11.80 DE 8030107 U

(43) Veröffentlichungstag der Anmeldung:
25.01.89 Patentblatt 89/04

(60) Veröffentlichungsnummer der früheren
Anmeldung nach Art. 76 EPÜ: 0 052 346

(84) Benannte Vertragsstaaten:
AT BE CH DE FR GB IT LI

(71) Anmelder: **MAGNET-BAHN GMBH**
**Emslander Strasse 3**
**D-8130 Starnberg(DE)**

(72) Erfinder: **Heidelberg, Götz, Dipl.-Phys.**

**D-8136 Percha(DE)**
Erfinder: **Gründl, Andreas, Dr.**
**Haseneystrasse 20**
**D-8000 München 70(DE)**
Erfinder: **Rosner, Peter, Dr.**
**Waltherstrasse 16**
**D-8000 München 2(DE)**

(74) Vertreter: **Vogl, Leo, Dipl.-Ing.**
**AEG Aktiengesellschaft Patente u. Lizenzen**
**Theodor-Stern-Kai 1 Postfach 70 02 20**
**D-6000 Frankfurt am Main 70(DE)**

(54) **Elektrischer Antrieb oder Generator.**

(57) Elektrischer Antrieb oder Generator, mit einem mit Stromleitern versehenen Stator und einem mit Dauermagneten versehenen Läufer, die mit einem Spaltabstand zwischen sich angeordnet sind, mit mindestens einem, am Stator (2) vorgesehenen Sensor (38), der die Relativstellung von Stator (2) und Läufer (32) erfaßt, und mit einer von dem Sensor (38) gesteuerten elektronischen Schalteinrichtung, die bei antriebsgerechter bzw. generatorgerechter Relativstellung von Stator (2) und Läufer (32) eine elektrische Verbindung zwischen den Stromleitern (10) und einer Stromquelle bzw. Stromsenke herstellt, dabei ist der Läufer (32) zusätzlich zu den mit den Stromleitern zusammenwirkenden Dauermagneten (30) mit gesonderten mit dem Sensor (38) zusammenwirkenden Steuereinrichtungen, insbesondere Steuermagneten (34) versehen.

FIG. 3

## Elektrischer Antrieb oder Generator sowie deren Verwendungen

Die Erfindung bezieht sich auf einen elektrischen Antrieb oder Generator gemäß Oberbegriff des Anspruchs 1.

Der Erfindung liegt die Aufgabe zugrunde, einen besonders flexiblen selbststeuernden Antrieb oder Generator dieser Art zu schaffen.

Zur Lösung dieser Aufgabe ist der Antrieb oder Generator so ausgebildet, wie im kennzeichnenden Teil des Anspruchs 1 angegeben.

Bei einem derartigen Antrieb oder Generator sorgt die von dem Sensor gesteuerte elektronische Schalteinrichtung selbsttätig dafür, daß bei passenden Relativstellungen von Stator und Läufer den Leitern Strom zugeführt oder von den Leitern Strom abgeführt wird. Die Leiter sind in den meisten Fällen in Form von Spulen oder Wicklungen vorgesehen. In vielen Fällen ist es günstig und daher bevorzugt, mehrere Sensoren längs der Bewegungsbahn des Läufers am Stator entlang vorzusehen. Obwohl im Anspruch 1 von "Stromleitern" und "Dauermagneten" gesprochen ist, soll der untere Grenzfall von nur einem Stromleiter oder nur einem Dauermagnet mit umfaßt sein.

Die Ausdrucksweise "Antrieb oder Generator" soll nicht bedeuten, daß ein und dasselbe Aggregat in der Lage sein muß, diese beiden Funktionen wahlweise zu erfüllen. Es soll vielmehr zum Ausdruck gebracht werden, daß nach dem Prinzip der Erfindung sowohl ein Antrieb bzw. Motor als auch ein Generator erstellt werden kann. Nach dem Prinzip der Erfindung kann man allerdings auch ein Aggregat erstellen, das sowohl als Antrieb als auch als Generator arbeiten kann, was weiter unten noch deutlicher werden wird.

Die verwendeten Begriffe "Stator" und "Läufer" sollen nicht bedeuten, daß der Stator unbedingt der unbewegt bleibende Teil des Antriebs oder des Generators und der Läufer unbedingt der sich bewegende Teil des Antriebs oder des Generators ist. Vielmehr sind beide Möglichkeiten, also sich bewegender Stator mit unbewegt bleibendem Läufer und unbewegt bleibender Stator mit sich bewegendem Läufer, ausführbar, sogar die Möglichkeit, daß sich sowohl Stator als auch Läufer mit unterschiedlicher Geschwindigkeit bewegen. Der Fall des unbewegt bleibenden Stators ist jedoch bevorzugt, da diesem Strom zugeführt bzw. von diesem Strom abgeführt werden muß.

Eine Weiterbildung der Erfindung ist dadurch gekennzeichnet, daß der Bereich des Läufers, auf den der Sensor anspricht, gegenüber den Dauermagneten oder der Sensor gegenüber dem Stator in Richtung der Relativbewegung von Stator und Läufer verschiebbar ist. Dies gibt eine einfache Möglichkeit, die normale Antriebs- oder Generatorfunktion zu modifizieren, beispielsweise die Geschwindigkeit des Antriebs zu ändern, den Antrieb oder den Generator auszuschalten, von Antriebsfunktion auf Generatorfunktion umzuschalten und umgekehrt oder die Richtung des Antriebs bzw. die Stromrichtung des vom Generator gelieferten Stroms umzukehren.

Erfindungsgemäß verwendet man einen auf gesondert zu diesem Zweck angeordnete Dauermagnete ansprechenden Sensor. Dies führt zu einem einfach aufgebauten Antrieb oder Generator. Besonders bevorzugte Arten von Sensoren sind in Anspruch 3 angegeben.

Wegen zahlreicher Vorteile ist es besonders bevorzugt, den Stator in mehrere Abschnitte aufzuteilen, denen jeweils eine Schalteinrichtung zugeordnet ist. Vorzugsweise, insbesondere bei Linearstatoren, ist pro Statorabschnitt mindestens ein Sensor vorgesehen. Vorzugsweise sind die Statorabschnitte kürzer als der Läufer, so daß sich die Antriebs- oder Generatorfunktion auf mehrere Statorabschnitte verteilt. Da pro Abschnitt geringere Ströme bzw. Leistungen verarbeitet werden müssen, ergibt sich eine Verteilung der elektrischen Verluste. Da pro Abschnitt von der jeweiligen Schalteinrichtung geringere Ströme bzw. Leistungen bewältigt werden müssen, kommt man mit Schalteinrichtungen kleinerer Leistung aus, wodurch deren Preis ganz wesentlich überproportional sinkt. Damit einher geht die Verringerung des Kühlaufwandes für die Schalteinrichtungen, die Erhöhung der Redundanz bzw. Zuverlässigkeit, da der Ausfall einzelner Abschnitte die Gesamtfunktion nicht stört, und eine Vereinfachung der Wartung durch Austausch vergleichsweise billiger einzelner Schalteinrichtungen. Schließlich kommt man auch insgesamt in einen niedrigeren Spannungsbereich, da die Gegen-EMK pro Abschnitt klein bleibt und man sich in der vom Isolationsaufwand und damit vom Preisaufwand her günstigen VDE-Klasse bis 1000 V halten kann. Es ist also alles in allem sehr viel günstiger, statt eines einzigen oder weniger Abschnitte jeweils mit einer Schalteinrichtung die Zahl der Abschnitte und Schalteinrichtungen zu erhöhen und dafür eine größere Zahl von Schalteinrichtungen, die jedoch einzeln eine niedrigere Schaltleistung haben, vorzusehen. Im unteren Grenzfall besteht ein Statorabschnitt aus einem einzigen Stromleiterpaar bzw. einer einzigen Spule.

Für viele Anwendungsbereiche, beispielsweise Linearantriebe, macht man den Läufer wesentlich kürzer als den Stator. Insbesondere in diesem Fall ist es besonders vorteilhaft, die Länge der Abschnitte mindestens so groß zu machen wie die Länge der Steuermagnetreihe, das heißt die Länge der in Läuferbewegungsrichtung auf dem Läufer hintereinander angeordneten Steuermagnete. Dies gilt natürlich sinngemäß auch, wenn nicht auf Magnetfelder ansprechende Sensoren verwendet werden und entsprechend andere, auf solche Sensoren einwirkende Steuereinrichtungen am Läufer verwendet werden.

Jeder Stromleitergruppe eines Abschnittes, wenn für die weiteren Überlegungen einmal vereinfachend angenommen ist, daß alle gleichzähligen Stromleiter eines ganzen Abschnittes elektrisch zusammengeschaltet sind, sind vorzugsweise wenigstens zwei Sensoren zugeordnet, vorteilhafterweise einer am Anfang und der andere am Ende des jeweiligen Abschnittes. Mit Hilfe des einen Sensors kann man die zugeordnete Stromleitergruppe einschalten, sobald der Läufer in den zugehörigen Abschnitt eintritt, und mit Hilfe des zweiten Sensors kann man die zugehörige Stromleitergruppe wieder abschalten, wenn der Läufer den zugehörigen Absatz verläßt.

Besonders bevorzugt ist aber eine Verteilung der Sensoren längs des Stators derart, daß bei jeder Läuferstellung für jede der Stromleitergruppen einer der ihr zugeordneten Sensoren von dem am Läufer angeordneten Steuermagneten bzw. anderen Steuereinrichtungen beeinflußbar ist. Durch dies Sensorverteilung wird erreicht, daß man die jeweils betrachtete Stromleitergruppe solange eingeschaltet hält, wie von einem der dieser Stromleitergruppe zugeordneten Sensoren das Vorhandensein des Läufers im Bereich dieser Stromleitergruppe, vorzugsweise im Bereich des mit dieser Stromleitergruppe übereinstimmenden Abschnittes, festgestellt wird. Man umgeht dabei Probleme, die besonders dann, wenn der Läufer in Vorwärts- und Rückwärtsrichtung bewegbar sein soll, dadurch auftreten können, daß ein Teil der Sensoren eine Einschaltung und der Rest der Sensoren eine Abschaltung der Erregung der zugehörigen Stromleitergruppen bewirken soll.

Eine bevorzugte Verwendung des nach den beschriebenen Prinzipien aufgebauten, erfindungsgemäßen Linearantriebs oder Lineargenerators liegt beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen. Bei all diesen Einsatzzwecken kommen der einfache konstruktive Aufbau und die vielfältigen Regelungsmöglichkeiten zum Tragen.

Vorstehend ist auch dann, wenn an sich die Antriebsfunktion im Vordergrund stand, vielfach von "Antrieb oder Generator" gesprochen worden. Dies ist geschehen, um zu betonen, daß auch bei Antrieben eine Umschaltbarkeit auf Generatorfunktion zum Bremsen vorgesehen sein kann.

Eine weitere bevorzugte Verwendung des nach den Prinzipien der Erfindung aufgebauten Antriebs besteht im Einsatz als rotatorischer oder linearer Positionierantrieb.

Die Erfindung wird im folgenden anhand schematisiert dargestellter Ausführungsbeispiele noch näher erläutert. Es zeigen:

Fig. 1 einen Längsschnitt durch einen Linearantrieb längs I-I in Fig. 4;

Fig. 2 eine Ansicht von unten auf den Stator des Linearantriebs von Fig. 1 entsprechend II-II in Fig. 1;

Fig. 3 eine Ansicht von oben auf den Läufer des Linearantriebs von Fig. 1 entsprechend III-III in Fig. 1;

Fig. 4 einen Querschnitt des Linearantriebs von Fig. 1 längs IV-IV in Fig. 1;

In den verschiedenen Ausführungsbeispielen werden Teile, die sich funktionell entsprechen, mit gleichen Bezugszeichen versehen.

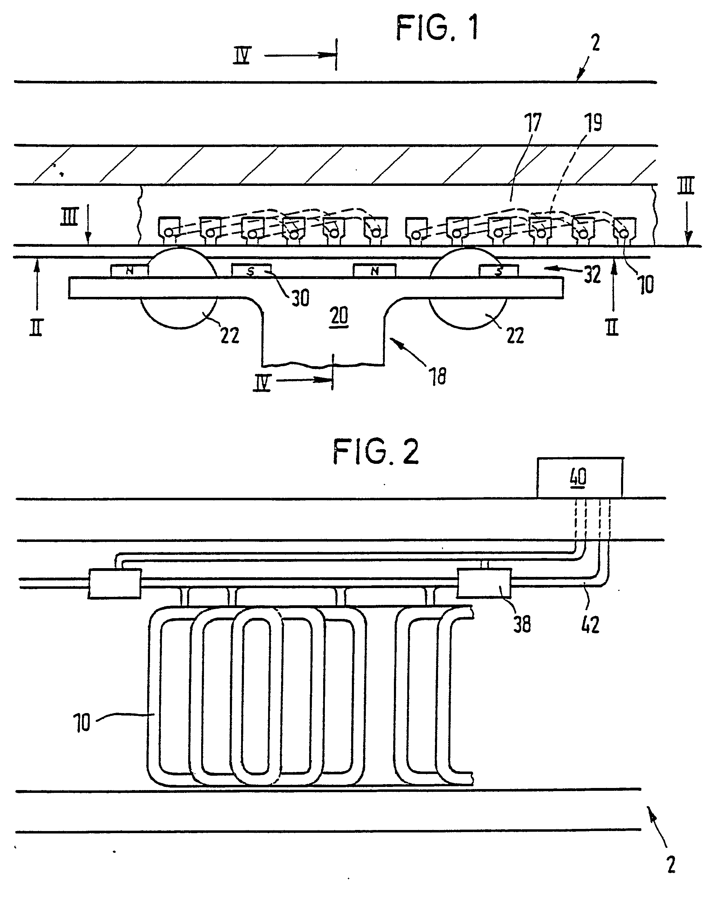

Bei dem in den Fig. 1 bis 4 dargestellten Linearantrieb handelt es sich um einen Antrieb, der für Transporteinheiten praktisch beliebiger Art geeignet ist. Konkret kann man sich ein magnetisch getragenes Fahrzeug zum Transport von Personen oder Lasten vorstellen.

Bei dieser Ausführungsform wird durchgehend aus Vereinfachungsgründen von "Antrieb" gesprochen, obwohl die Auslegung ohne weiteres so getroffen sein kann, daß bei einer Verlangsamung der Geschwindigkeit der Transporteinheit von Antriebsfunktion auf Generatorfunktion umgeschaltet werden kann.

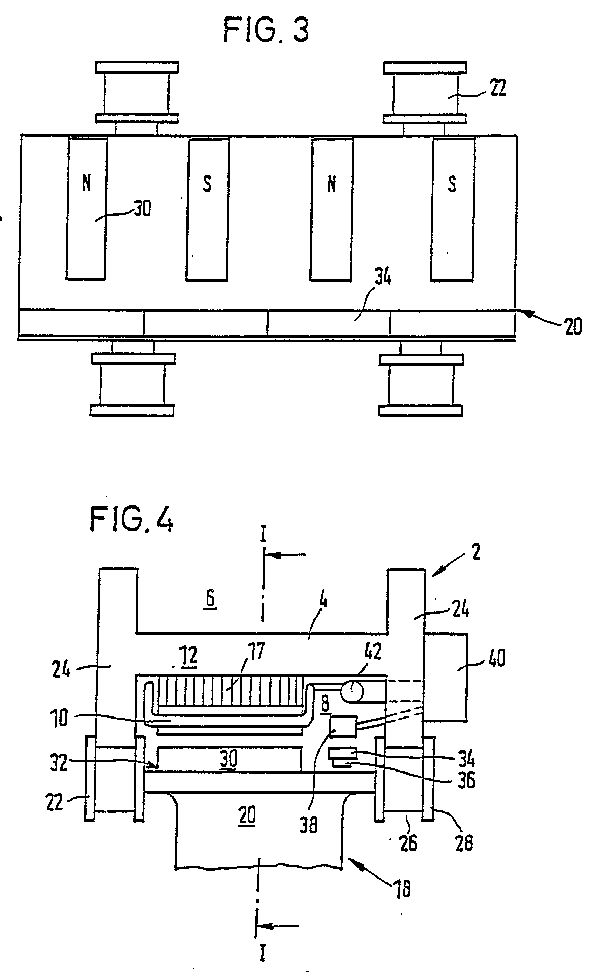

Der tragende Bestandteil des Stators 2 des Antriebs ist als liegender Doppel-T-Träger 4 ausgebildet. Somit entstehen, gesehen im Querschnitt des Trägers 4, eine obere, etwa rechteckige Ausnehmung 6 und eine untere, etwa rechteckige Ausnehmung 8, vgl. Fig. 4.

In der unteren Ausnehmung 8 ist ein Paket 17 aus sich in Längsrichtung erstreckenden, aufrecht stehenden, lamellierten Blechen aus ferromagnetischem Material befestigt. Das Paket 17 weist in seiner Unterseite Quernuten 19 auf, die einen gegenseitigen Mittenabstand haben, der einem Drittel des Mittenabstandes der weiter unten beschriebenen Dauermagnete 30 entspricht. In die Quernuten 19 sind Spulen 10 eingelegt, die in der Draufsicht etwa reckteckig sind. Jede Spule 10 besteht aus mehreren Windungen, wobei in den Zeichnungen aus Vereinfachungsgründen die Spulen jeweils nur aus einem dicken Draht bestehend dargestellt sind. Die quer zur Relativbewegungsrichtung von Stator und Läufer verlaufenden Queräste jeder Spule 10 befinden sich jeweils in einer Quernut 19, während die die Queräste verbindenden Längsäste seitlich des Pakets 17 liegen. Die Queräste jeder Spule 10 lassen zwischen sich zwei Quernuten 19 frei, die von der Querästen benachbarter Spulen besetzt werden. Die Längsäste führen seitlich des Pakets 17 zunächst vom ersten Querast schräg aufwärts und dann unter seitlicher Ausbuchtung nach außen steiler zurück nach unten zum anderen Querast, um auf diese Weise Platz für die Überkreuzung mit den Längsästen der beiden benachbarten Spulen zu schaffen.

Das Paket 17 bildet zusammen mit dem eingelegten Stromleitern 10 den funktionellen Teil des Stators 2.

Statt das Paket 17 mit Quernuten 19 auszubilden, können die zwischen den Quernuten 19 befindlichen Vorsprünge weggelassen werden und können die auf der flachen Unterseite des Pakets 17 angeordneten Spulen 10 mit einer Vergußmasse vergossen werden, die aus Kunststoff mit einem hohen Anteil von darin verteilten Eisenteilchen oder Eisenoxidteilchen sehr kleiner Korngröße von beispielsweise 70 $\mu$m besteht. Dabei müssen die Unterseiten der Stromleiter 10 zur Sicherstellung eines geordneten magnetischen Flusses frei von Vergußmasse bleiben.

Von der anzutreibenden Transporteinheit 18 ist nur der obere, mit dem Stator zusammenwirkende Bereich zeichnerisch dargestellt. Dieser obere Teil besteht aus einer Art Wagen 20 mit vier drehbar gelagerten Rädern 22, von denen zwei auf einem senkrechten Schenkel 24 und zwei auf dem anderen senkrechten Schenkel 24 des Trägers 4 abrollen, wobei die Räder 22 jeweils mit einer entsprechenden Spurrille 26 und Spurkränzen 28 versehen sind.

Auf der im wesentlichen ebenen Oberseite des Wagens 20 ist in Bewegungsrichtung hintereinander eine Reihe von Dauermagneten 30 angeordnet. Der unter den Magneten 30 befindliche Bereich des Wagens 20 besteht aus ferromagnetischem Material zur Schaffung eines magnetischen Rückschlusses auf der Rückseite der Dauermagneten 30. Die Dauermagnete 30 bilden zusammen mit diesem Rückschluß den Läufer 32 des Antriebs.

Die Dauermagnete 30 haben die Gestalt von sich quer zur Bewegungsrichtung des Wagens 20 erstreckenden, langgestreckten Quadern. Die Dauermagnete 30 sind, gemessen quer zur Bewegungsrichtung des Wagens 20, etwa so breit wie die Queräste der Stromleiter 10. Die untere Oberfläche der Vergußmasse bzw. des Blechpakets 17 hat einen Abstand von einigen Millimetern von den oberen Polflächen der Magnete 30.

In Bewegungsrichtung des Wagens 20 benachbarte Dauermagnete 30 haben einen Abstand voneinander, der jeweils dem in Bewegungsrichtung gemessenen Abstand der beiden Queräste einer Spule entspricht, jeweils gemessen von Mitte zu Mitte. Die Dauermagnete sind so auf dem Wagen 20 befestigt, daß bei den oberen Polflächen der Dauermagnete 30 Nordpole und Südpole miteinander abwechseln.

Die erste, vierte, siebte usw. Spule, die zweite, fünfte, achte usw. Spule sowie die dritte, sechste, neunte usw. Spule in Bewegungsrichtung des Wagens 20 sind jeweils hintereinandergeschaltet oder parallelgeschaltet. Somit entstehen magnetische Kreise, die jeweils im Stator 2 aus zwei mit räumlich entgegengerichteter Stromrichtung durchflossenen Querästen einer Spule bestehen, wobei der magnetische Fluß durch die wegen der Eisenpulverfüllung einen geringen magnetischen Widerstand aufweisende Vergußmasse bzw. das Blechpaket 17 geführt ist. Der dem Läufer 32 zugeordnete Teil jedes magnetischen Kreises besteht aus zwei Dauermagneten 30 mit dem entsprechenden beschriebenen Rückschluß.

Die Stromleiter 10 und die Dauermagnete 30 nehmen nicht die gesamte Breite zwischen den Stegen 24 bzw. zwischen den Rädern 22 ein. Im verbleibenden Raum des Wagens 20 ist eine weitere Reihe von als Dauermagneten ausgebildeten Steuermagneten 34 vorgesehen, die hinsichtlich Mittenabstand in Bewegungsrichtung des Wagens 20 mit den Dauermagneten 30 übereinstimmen, jedoch in Bewegungsrichtung länger sind, so daß sie aneinanderstoßen. In Normallage befinden sich die Kanten der Steuermagnete 34 in Bewegungsrichtung jeweils in der Mitte zwischen zwei Dauermagneten 30. Die Steuermagnete 34 sind auf einer längs verlaufenden Stange 36 angeordnet und mit Hilfe dieser Stange und eines nicht dargestellten Mechanismus in Bewegungsrichtung des Wagens 20 relativ zu den Dauermagneten 30 verschiebbar. Im verbleibenden Freiraum der unteren Ausnehmung 8 sind gegenüber den Steuermagneten 34 mehrere Hallsonden 38 in Bewegungsrichtung des Wagens 20 verteilt mit geringem Abstand über den Steuermagneten 34 angeordnet. Die Hallsonden 38 liefern ihr Signal "Steuermagnet 34 befindet sich unter der Sonde" an eine Schalteinrichtung 40, die in einem außen an einem Steg 24 metallisch leitend angeschraubten Gehäuse untergebracht ist. Die Schalteinrichtung 40 ist in diesem Gehäuse mit Kunststoff eingegossen, und die Verlustwärme der Schalteinrichtung wird über das Gehäuse an den Steg 24 abgeführt.

Von der Schalteinrichtung führt ein dreiphasiges Kabel 42 entlang dem Träger 4 oberhalb der Hallsonden 38. Dieses Kabel 42 versorgt sämtliche Spulen 10 mit Strom. Es ermitteln die Hallsonden 38 die Relativstellung des Wagens 20 längs des Stators 2, und die Schalteinrichtung 40 sorgt dafür, daß gerade die für die Antriebsfunktion passenden Stromleiter 10 eingeschaltet werden, so daß jeweils eine Vortriebskraft ausübende magnetische Kreise synchron eingeschaltet werden. Der gesamte Stator ist längs in eine Vielzahl von Abschnitten unterteilt, wobei für jeden Abschnitt eine Schalteinrichtung 40 vorgesehen ist. Der Abstand der Hallsonden 38 in Bewegungsrichtung ist kleiner als der Abstand zwischen dem vordersten und dem hintersten Steuermagnet 34 des Wagens 10. Der beschriebene Antrieb ist vollkommen selbststeuernd, da sich der Wagen 20 sozusagen selbst immer zum richtigen Zeitpunkt die richtigen Stromleiter 10 einschaltet.

Durch Verschieben der Stange 36 und damit der Steuermagnete 34 in Bewegungsrichtung des Wagens 20 läßt sich vom Wagen her Einfluß auf die Bewegung des Wagens nehmen. Wenn man zum Beispiel die Steuermagnete 34 auf die Mitte zwischen zwei benachbarte Dauermagnete 30 stellt, findet kein Antrieb statt. Wenn man zum Beispiel die Steuermagnete 34 um einen ganzen Mittenabstand der Dauermagnete 30 verschiebt, erfolgt der Antrieb in die umgekehrte Richtung. Geringere Verschiebungen der Steuermagnete 34 bewirken über eine künstliche Wirkungsgradverschlechterung des Antriebs eine Reduzierung der Vortriebskraft.

Die außen am Träger 4 angeschraubte Schalteinheit 40 ist über Steckverbindungen mit dem Kabel 42 und den Hallsonden 38 verbunden, so daß sie sich bei Defekten leicht auswechseln läßt.

Statt der beschriebenen Art der Spulenanordnung kann man auch mäanderförmig verlegte, beispielsweise in die Quernuten 19 des Stators 2 eingelegte Leiter vorsehen.

Beim dargestellten und beschriebenen Ausführungsbeispiel ist die Auslegung so, daß die magnetische Anziehung in Vertikalrichtung zwischen den Dauermagneten 30 und dem Stator 2 ausreicht, das Gewicht der Transporteinheit 18, gegebenenfalls mit Zuladung, zu tragen. Die Räder 22 sorgen dafür, daß der Luftspalt zwischen den Dauermagneten 30 und der Statorunterseite erhalten bleibt. Man kann aber die Auslegung auch so treffen, daß die Räder 22 oben auf dem Stator 2 abrollen, also das Gewicht der Transporteinheit 18 teilweise magnetisch und teilweise durch die Räder 22 getragen wird, oder daß sowohl auf der Statorunterseite als auch auf der Statoroberseite ablaufende Räder vorgesehen wird.

## Ansprüche

1. Elektrischer Antrieb oder Generator, mit einem mit Stromleitern versehenen Stator und einem mit Dauermagneten versehenen Läufer, die mit einem Spaltabstand zwischen sich angeordnet sind, mit mindestens einem, am Stator (2) vorgesehenen Sensor (38), der die Relativstellung von Stator (2) und Läufer (32) erfaßt, und mit einer von dem Sensor (38) gesteuerten elektronischen Schalteinrichtung, die bei antriebsgerechter bzw. generatorgerechter Relativstellung von Stator (2) und Läufer (32) eine elektrische Verbindung zwischen den Stromleitern (10) und einer Stromquelle bzw. Stromsenke herstellt, dadurch gekennzeichnet, daß der Läufer (32) zusätzlich zu den mit den Stromleitern zusammenwirkenden Dauermagneten (30) mit gesonderten mit dem Sensor (38) zusammenwirkenden Steuereinrichtungen, insbesondere Steuermagneten (34) versehen ist.

2. Antrieb oder Generator nach Anspruch 1, dadurch gekennzeichnet, daß der mit den Steuermagneten (34) versehene Bereich des Läufers (32) gegenüber den Dauermagneten (30) oder der Sensor (38) gegenüber dem Stator (2) in Richtung der Relativbewegung von Stator (2) und Läufer (32) verschiebbar ist.

3. Antrieb oder Generator nach Anspruch 1 oder 2, dadurch gekennzeichnet, daß der Sensor als Hallsonde (38), als Reedkontakt, als Photozelle, als Ultraschallsensor, Gasstromsensor, Induktionssensor oder Permeabilitätssensor ausgebildet ist.

4. Antrieb oder Generator nach einem der Ansprüche 1 bis 3, gekennzeichnet durch Abschnitte, die kürzer als der Läufer (32) sind.

5. Antrieb oder Generator nach Anspruch 4, dadurch gekennzeichnet, daß ein Teil der Abschnitte abschaltbar ist.

6. Antrieb oder Generator nach einem der vorhergehenden Ansprüche, dadurch gekennzeichnet, daß der Läufer (32) wesentlich kürzer als der Stator (2) ist.

7. Antrieb oder Generator nach Anspruch 6, dadurch gekennzeichnet, daß die Länge der Abschnitte (n-1, n, n+1, ...) mindestens so groß ist wie die Länge der Reihe der Steuermagneten (34).

8. Antrieb oder Generator nach Anspruch 7, dadurch gekennzeichnet, daß jeder Stromleitergruppe eines Abschnitts wenigstens zwei Sensoren (38) zugeordnet sind.

9. Verwendung des linear ausgebildeten Antriebs oder Generators nach einem der Ansprüche 1 bis 8 beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen.

FIG. 1

FIG. 2

# FIG. 3

# FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 267 333 (LICENTIA) <br> * Spalte 5, Zeilen 14-24 * <br> --- | 1,3 | H 02 K 29/06 <br> H 02 K 41/02 |
| A | DE-A-1 613 758 (M. BARTHALON) <br> * Seite 6, letzter Absatz - Seite 8, Zeile 3 * <br> --- | 1,2,9 | |
| A | DE-A-1 957 287 (JEUMONT-SCHNEIDER) <br> * Seite 9, Absatz 3 - Seite 10, Zeile 5 * <br> ----- | 1,5,9 | |

**RECHERCHIERTE SACHGEBIETE (Int. Cl.4)**

B 60 L 13/00
H 02 K 29/00
H 02 K 41/00

Der vorliegende Recherchenbericht wurde für alle Patentansprüche erstellt

| Recherchenort | Abschlußdatum der Recherche | Prüfer |
|---|---|---|
| BERLIN | 20-10-1988 | GESSNER E A F |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)